# EUROPEAN PATENT APPLICATION

(11) **EP 4 647 642 A1**
(43) Date of publication of application: **12.11.2025**
(21) Application number: 24211233.2
(22) Date of filing: 06.11.2024
(51) Int. Cl.: F16M 11/04, F16M 11/10, F16M 11/20, G06F 1/16, H04N 5/64

(54) **DISPLAY DEVICE**

(30) Priority: 08.05.2024 KR 20240060601
(71) Applicant: LG Electronics Inc., Yeongdeungpo-gu Seoul 07336 (KR)
(72) Inventor: LEE, Kangyeung, 06772 Seoul (KR); KIM, Sanghoon, 06772 Seoul (KR); JUNG, Hyunjin, 06772 Seoul (KR)
(74) Representative: Vossius & Partner Patentanwälte Rechtsanwälte mbB

(57) **Abstract**

A display device (1) including: a display panel (11); a first bracket (61) positioned behind the display panel; a second bracket (62) positioned between the display panel and the first bracket and coupled to the display panel; and a support arm (50) elongated and connecting the first and second brackets, wherein the support arm may include: an inner arm (51) rotatably coupled to each of the first and second brackets; an outer arm (52) adjacent to the inner arm and rotatably coupled to each of the first and second brackets; and a supporter (53) which has one side coupled to the inner arm and the other side supporting the outer arm, the supporter including an elastic member (53) which is compressible in a longitudinal direction of the support arm.

## Description

### CROSS-REFERENCE TO RELATED APPLICATION

This application claims the priority benefit of Korean Patent Application No. 10-2024-0060601, filed on May 8, 2024, the disclosures of which is incorporated herein by reference.

### BACKGROUND OF THE INVENTION

### Field of the invention

The present disclosure relates to a display device.

### Description of the Related Art

As information society develops, the demand for display devices is also increasing in various forms. In response to this, various display devices such as Liquid Crystal Display Device (LCD), Plasma Display Panel (PDP), Electroluminescent Display (ELD), Vacuum Fluorescent Display (VFD), and Organic Light Emitting Diode (OLED) have been researched and used in recent years.

Among these, a liquid crystal panel includes a TFT substrate and a color filter substrate that face each other with a liquid crystal layer interposed therebetween, and may display an image by using light provided from a backlight unit. In addition, an OLED panel may display an image by depositing an organic material layer capable of self-emitting light on a substrate on which a transparent electrode is formed.

Recently, much research has been conducted on a structure that freely adjusts the angle or location of a display.

### SUMMARY OF THE INVENTION

An object of the present disclosure is to solve the above and other problems.

Another object of the present disclosure may be to provide a display device including a stand that supports a display panel.

Another object of the present disclosure may be to provide a structure that can freely adjust the angle or height of a display panel.

Another object of the present disclosure may be to provide various motion operations of a display panel.

In accordance with an aspect of the present disclosure, a display device may include: a display panel; a first bracket positioned behind the display panel; a second bracket positioned between the display panel and the first bracket and coupled to the display panel; and a support arm elongated and connecting the first and second brackets, wherein the support arm may include: an inner arm rotatably coupled to each of the first and second brackets; an outer arm adjacent to the inner arm and rotatably coupled to each of the first and second brackets; and a supporter which has one side coupled to the inner arm and the other side supporting the outer arm, the supporter including an elastic member which is compressible in a longitudinal direction of the support arm.

### BRIEF DESCRIPTION OF THE DRAWINGS

The above and other objects, features and advantages of the present invention will be more apparent from the following detailed description in conjunction with the accompanying drawings, in which:

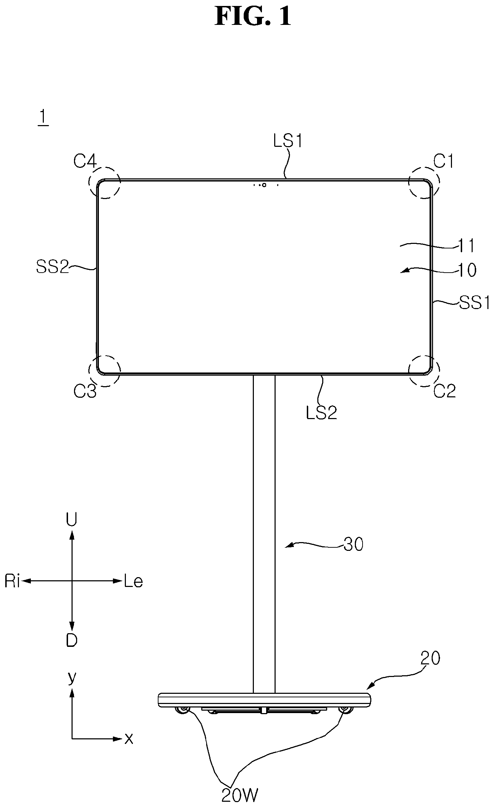

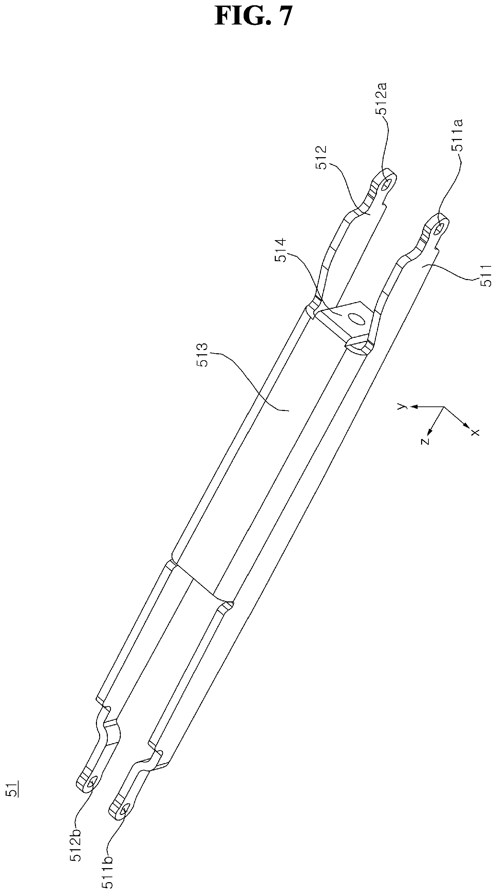

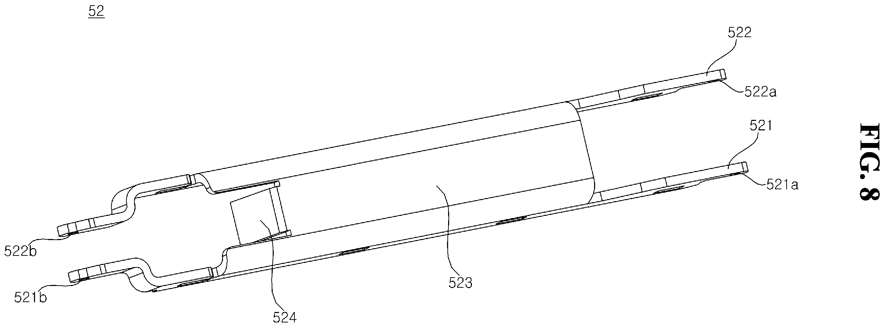

FIGS. 1 to 16 are diagrams illustrating examples of a display device according to embodiments of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function.

In the present disclosure, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are only used to distinguish one element from another.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

Direction indications of up (U), down (D), left (Le), right (Ri), front (F), and rear (R) shown in the drawings are only for convenience of explanation, and the technical concept disclosed in this specification is not limited thereto.

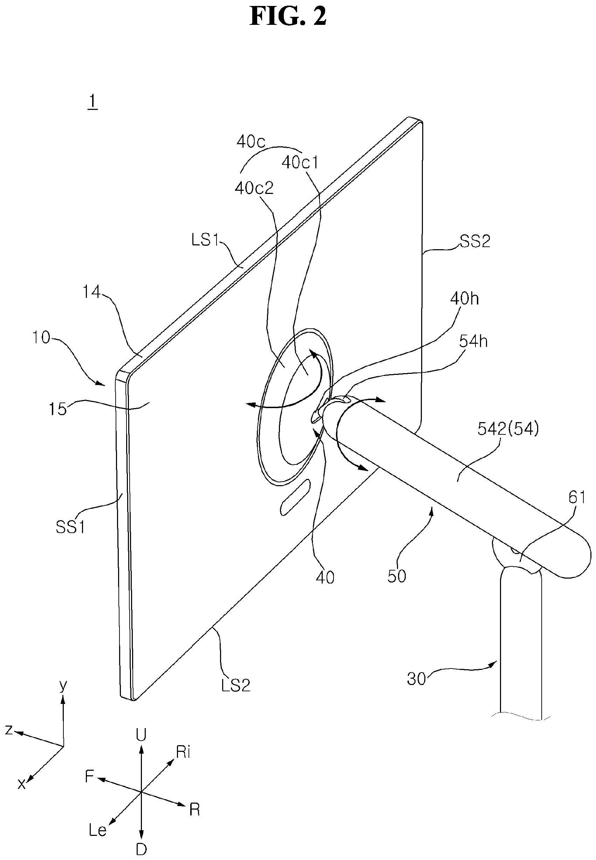

Referring to FIGS. 1 and 2, a display device 1 may include a display 10. The display 10 may include a display panel 11 that displays an image. The front surface of the display panel 10 may display an image. The display 10 may be referred to as a display unit 10 or a head 10.

The display 10 includes a first long side LS1, a second long side LS2 opposite to the first long side LS1, a first short side SS1 adjacent to the first long side LS1 and the second long side LS2, and a second short side SS2 opposite to the first short side SS1. Meanwhile, for convenience of explanation, the lengths of the first and second long sides LS1 and LS2 are shown and described as being longer than the lengths of the first and second short sides SS1 and SS2, but it may be possible that the lengths of the first and second long sides LS1 and LS2 are approximately the same as the lengths of the first and second short sides SS1 and SS2.

The direction parallel to the short sides SS1 and SS2 of the display 10 may be referred to as an up-down direction. The direction parallel to the long sides LS1 and LS2 of the display 10 may be referred to as a left-right direction. The direction perpendicular to the short sides SS1 and SS2 and the long sides LS1 and LS2 of the display 10 may be referred to as a front-rear direction.

The direction in which the display 10 displays an image may be referred to as a front (F, z), and the opposite direction may be referred to as a rear R. The side of the first short side SS1 may be referred to as a left side (Le, x), and the side of the second short side SS2 may be referred to as a right side Ri. The side of the first long side LS1 may be referred to as an upper side (U, y), and the side of the second long side LS2 may be referred to as a lower side D.

The first long side LS1, the second long side LS2, the first short side SS1, and the second short side SS2 may be referred to as an edge of the display device 1. A point where the first long side LS1, the second long side LS2, the first short side SS1, and the second short side SS2 meet each other may be referred to as a corner. A point where the first long side LS1 and the first short side SS1 meet may be referred to as a first corner C1. A point where the first short side SS1 and the second long side LS2 meet may be referred to as a second corner C2. A point where the second long side LS2 and the second short side SS2 meet may be referred to as a third corner C3. A point where the second short side SS2 and the first long side LS1 meet may be referred to as a fourth corner C4.

A stand 20, 30, 40, and 50 may support the display 10. The stand 20, 30, 40, and 50 may include a base 20, a pole 30, a rotatable connector 40, and a support arm 50.

The base 20 may be placed on a ground. The base 20 may be round or angular. A plurality of wheels 20W may be mounted on the lower surface of the base 20. A battery (not shown) may be built into the base 20, the pole 30, the support arm 50, and/or the display 10. The display device 1 may be operated by receiving power from the battery.

The pole 30 may extend vertically from the base 20. The lower end of the pole 30 may be adjacent to the circumference of the base 20 and may be coupled to the base 20.

The support arm 50 may extend in a direction intersecting the pole 30 and may be coupled to the upper end of the pole 30. The rotatable connector 40 may be located between the display 10 and the pole 30 and may be coupled to the display 10 and the pole 30.

Accordingly, the display 10 may be supported by the stand 20, 30, 40, and 50 and may be spaced upward from the ground.

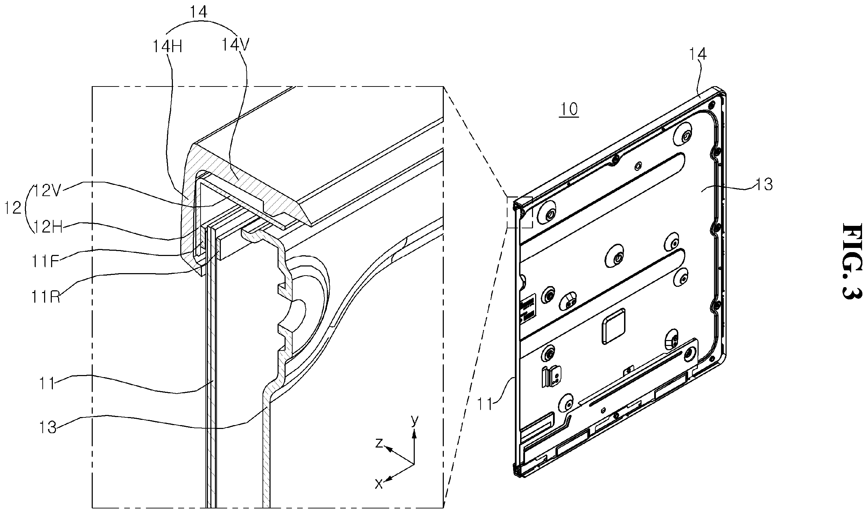

Referring to FIG. 3, the display 10 may include a display panel 11, a middle cabinet 12, a frame 13, a side frame 14, and a back cover 15.

The display panel 11 may form the front surface of the display 10. For example, the display panel 11 may be an LCD panel, an OLED panel, or an LED panel. The display panel 11 may divide an image into a plurality of pixels and output an image adjusted with color, brightness, and saturation for each pixel. The display panel 11 may be divided into an active area where images are displayed and a de-active area where images are not displayed. The display panel 11 may generate light corresponding to the color of red, green, or blue according to a control signal.

The middle cabinet 12 may extend along the circumference of the display panel 11. A horizontal portion 12H may be located in front of the display panel 11. A vertical portion 12V may intersect with the horizontal portion 12H and cover the side surface of the display panel 11.

The frame 13 may be located in a rear of the display panel 11. Electronic components such as a printed circuit board (PCB) may be coupled to the frame 13. A power supply board, a timing controller board, and a main board can be mounted on the rear surface of frame 13.

The side frame 14 may form a circumference of the display 10. The horizontal portion 14H may be located in front of the horizontal portion 12H of the middle cabinet 12. The vertical portion 14V may cover the vertical portion 12V of the middle cabinet 12.

The back cover 15 (see FIG. 2) may form the rear surface of the display 10. The back cover 15 may cover the rear of the frame 13 and may be coupled to the frame 13.

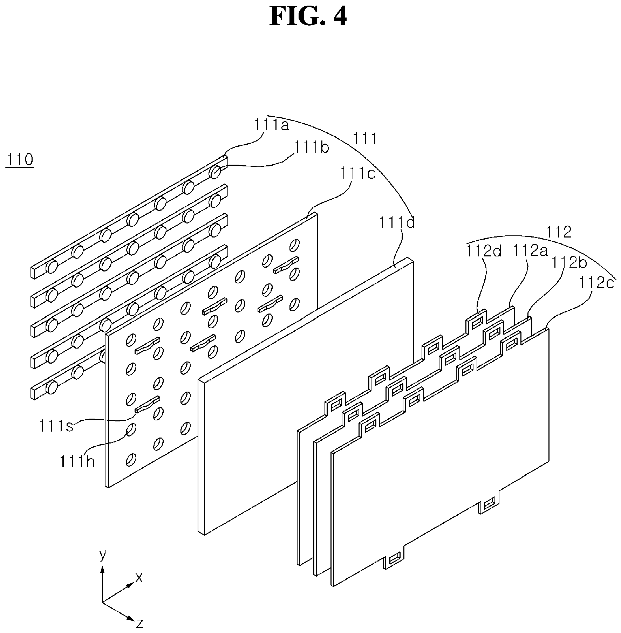

Referring to FIGS. 3 and 4, the backlight unit 110 may be located between the display panel 11 and the frame 13 and may be coupled to the frame 13. The display panel 11 may be referred to as an LCD panel. The backlight unit 110 may include an optical layer 111 and an optical sheet 112.

The optical layer 111 may include a substrate 111a, at least one light source 111b such as an Light Emitting Diode (LED), a reflective sheet 111c, and a diffusion plate 111d. The reflective sheet 111c may be provided with a hole 111h where the light source 111b is located. The diffusion plate 1 lid may be located in front of the reflective sheet 111c. A spacer 111s may support the rear surface of the diffuser plate 111d at between the reflective sheet 111c and the diffuser plate 111d.

The optical sheet 112 may be located in front of the diffusion plate 111d. The optical sheet 112 may include at least one of a diffusion sheet or a prism sheet.

Accordingly, the light from the light source 111b can be provided to the display panel 11 through the diffusion plate 111d and the optical sheet 112.

Meanwhile, the display panel 11 of the present disclosure may be an OLED panel that does not require the above-described backlight unit 110, or may be another type of panel.

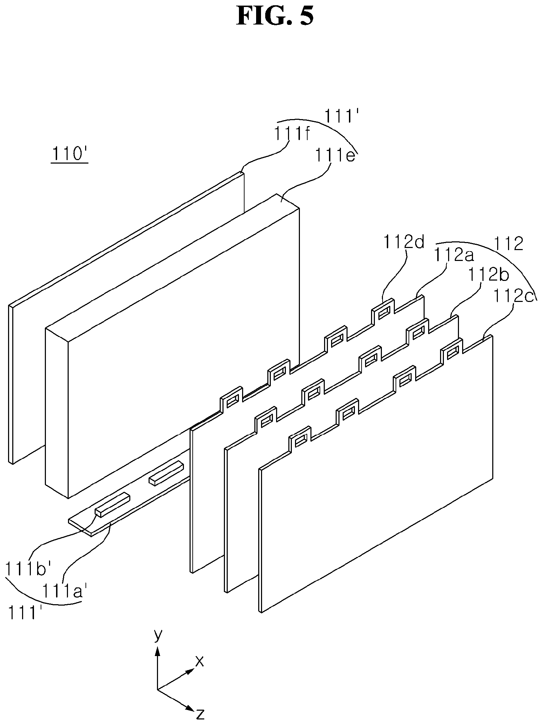

Referring to FIGS. 3 and 5, a backlight unit 110' may be located between the display panel 11 and the frame 13 and may be coupled to the frame 13. The display panel 11 may be referred to as a LCD panel. The backlight unit 110' may include an optical layer 111' and an optical sheet 112.

The optical layer 111' may include a substrate 111a', at least one light source 111b' such as a Light Emitting Diode (LED), a reflective sheet 111f, and a light guide plate 111e. The light guide plate 111e may be located between the frame 13 and the optical sheet 112 and may be supported by the frame 13. The reflective sheet 111f may be located between the frame 13 and the light guide plate 111e, and may be supported by the frame 13.

Accordingly, light from the light source 111b' may be provided to the display panel 11 through the light guide plate 111e and the optical sheet 112. Meanwhile, the display panel 11 of the present disclosure may be an OLED panel that does not require the above-described backlight unit 110' or another type of panel.

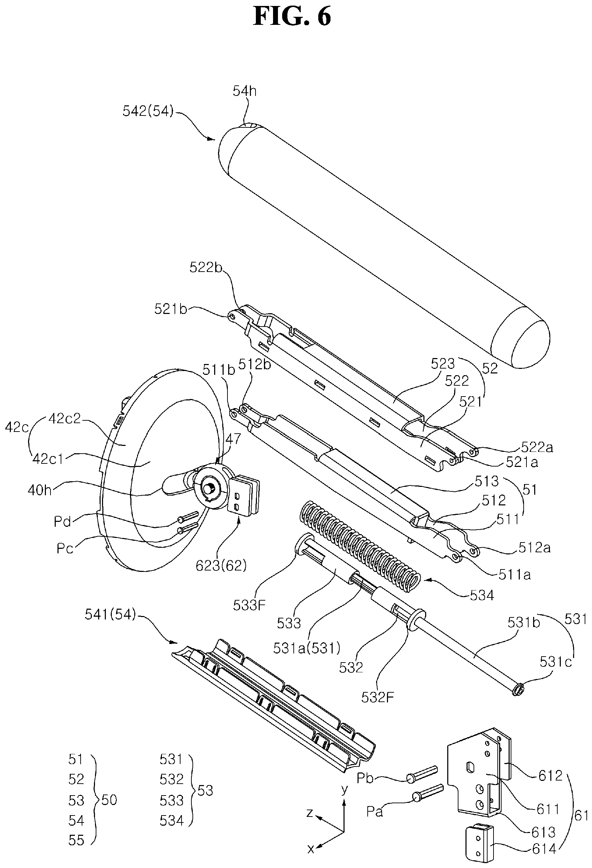

Referring to FIGS. 6 to 8, the support arm 50 may include an inner arm 51, an outer arm 52, and a supporter 53.

The inner arm 51 may be extended long. The longitudinal direction of the inner arm 51 may be parallel to the longitudinal direction of the support arm 50. The inner arm 51 may include a first inner bar 511, a second inner bar 512, and an inner bridge 513. The first inner bar 511 and the second inner bar 512 may extend in the longitudinal direction of the inner arm 51 and may be opposite to each other. The inner bridge 513 may connect the upper side of the first inner bar 511 and the upper side of the second inner bar 512. The inner arm 51 may include a metal material. The inner arm 51 may be referred to as a first arm 51, a lower arm 51, or an inner bracket 51.

The outer arm 52 may extend long. The outer arm 52 may be adjacent to the inner arm 51. The longitudinal direction of the outer arm 52 may be parallel to the longitudinal direction of the inner arm 51. The outer arm 52 may include a first outer bar 521, a second outer bar 522, and an outer bridge 523. The first outer bar 521 and the second outer bar 522 may extend in the longitudinal direction of the outer arm 52 and may be opposite to each other. The outer bridge 523 may connect the upper side of the first outer bar 521 and the upper side of the second outer bar 522. The outer arm 52 may include a metal material. The outer arm 52 may be referred to as a second arm 52, an upper arm 52, or an outer bracket 52.

In addition, the outer arm 52 may surround a portion of the inner arm 51. The first and second inner bars 511 and 512 of the inner arm 51 may be located between the first and second outer bars 521 and 522 of the outer arm 52. The inner bridge 513 of the inner arm 51 may be located below the outer bridge 523 of the outer arm 52.

The supporter 53 may include a rod 531, a stopper 532, a cylinder 533, and an elastic member 534. The supporter 53 may be referred to as a spring module 53.

The rod 531 may be located between the first and second inner bars 511 and 512 of the inner arm 51 and may extend long along the inner arm 51. The rod 531 may penetrate the inner rib 514 of the inner arm 51. The inner rib 514 may be bent from the inner bridge 513 to between the first and second inner bars 511 and 512. The rod 531 may be divided into a first portion 531a and a second portion 531b based on the inner rib 514. The first portion 531a may extend from the inner rib 514 in a first direction, and the second portion 531b may extend from the inner rib 514 in a second direction opposite to the first direction.

The stopper 532 may be coupled to the first portion 531a of the rod 531 so as to be movable in the longitudinal direction of the rod 531. The stopper 532 may be located between the inner rib 514 and the outer rib 524. The rod 531 may rotate about its longitudinal axis. For example, a male thread may be formed on the outer circumferential surface of the first portion 531a, and a female thread engaging with the male thread may be formed on the inner circumferential surface of the stopper 532. In this case, when the rod 531 rotates in a first rotation direction R1, the stopper 532 can move in a direction away from the inner rib 514, and when the rod 531 rotates in a second rotation direction R2 opposite to the first rotation direction R1, the stopper 532 can move in a direction closer to the inner rib 514. A flange 532F may be formed at one end of the stopper 532 facing the inner rib 514, and may be located on or spaced apart from the inner rib 514.

The cylinder 533 may be coupled to the first portion 531a of the rod 531 so as to be movable in the longitudinal direction of the rod 531, and may be opposite to the stopper 532. The cylinder 533 may extend in the longitudinal direction of the rod 531, and the distal end of the first portion 531a of the rod 531 may be inserted into the cylinder 533. The cylinder 533 on the rod 531 may approach or move away from the stopper 532. The outer rib 524 of the outer arm 52 may be located on the distal end of the cylinder 533. The outer rib 524 may be bent from the outer bridge 523 to between the first and second inner bars 511 and 512, and may be opposite to the inner rib 514. The flange 533F may be formed at one end of the cylinder 533 facing the outer rib 524 and may support the outer rib 524.

The elastic member 534 may be located between the stopper 532 and the cylinder 533 and may be stretchable in the longitudinal direction of the rod 531. The elastic member 534 may be a spring having elasticity. The elastic member 534 may be wound around the stopper 532 and the cylinder 533 in the form of a coil. One end of the elastic member 534 may be fixed to the flange 532F of the stopper 532, and the other end of the elastic member 534 may be fixed to the flange 533F of the cylinder 533. Accordingly, as the cylinder 533 approaches the stopper 532, the elastic member 534 can be gradually compressed, and as the cylinder 533 moves away from the stopper 532, the elastic member 534 can be gradually restored to its original length.

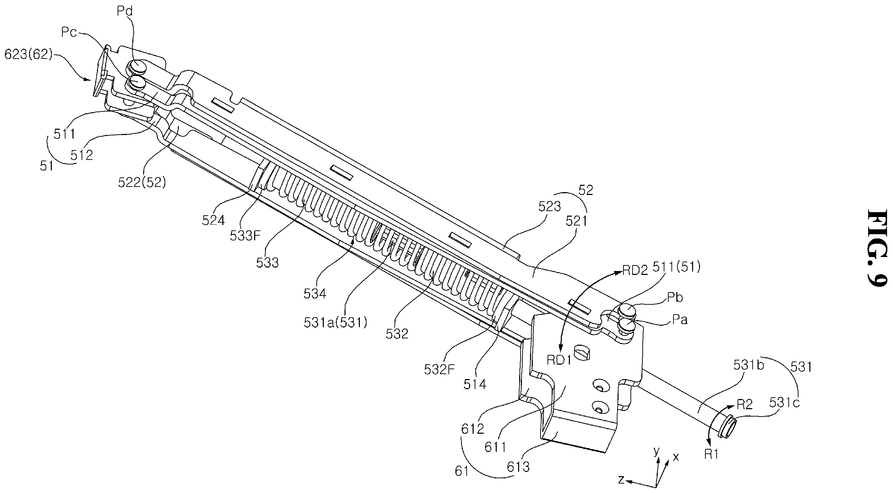

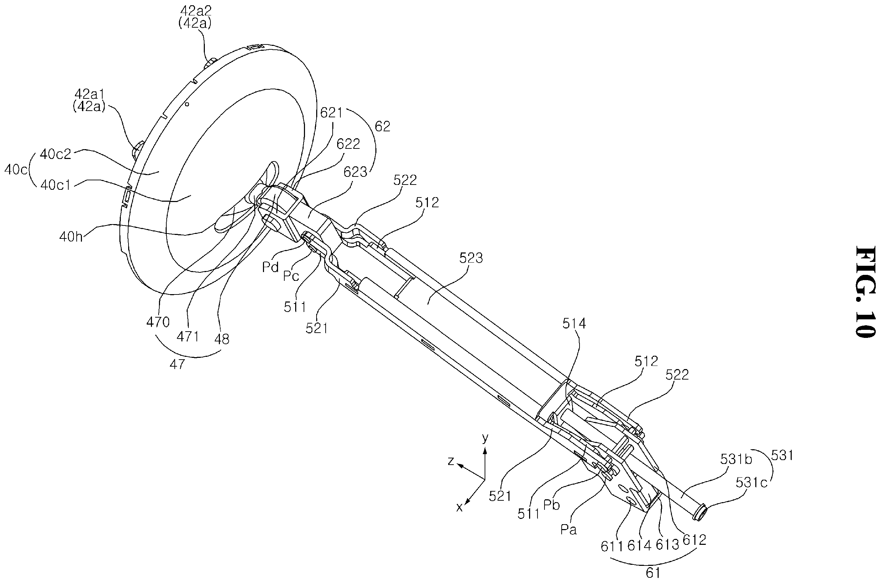

Referring to FIGS. 9 and 10, the support arm 50 may be rotatably coupled to each of a first bracket 61 and a second bracket 62.

The first bracket 61 may be coupled to the upper end of the pole 30 (see FIG. 2) and may be adjacent to one end of the support arm 50. The first bracket 61 may include a first side part 611, a second side part 612, and a bottom part 613. The bottom part 613 may form the bottom of the first bracket 61. The first side part 611 may be bent upward from one side of the bottom part 613, and the second side part 612 may be bent upward from the other side of the bottom part 613. The first and second side parts 611 and 612 may be spaced apart from each other. The spacer 614 may be inserted into between the first and second side parts 611 and 612. The first bracket 61 may include a hot rolled galvanized iron (HGI) material. The first bracket 61 may be referred to as a rear bracket 61, a hinge bracket 61, or a clip 61.

In addition, the first bracket 61 may be located between the inner bars 511 and 512 of the inner arm 51. The first bracket 61 may be located between the outer bars 521 and 522 of the outer arm 52. The first inner bar 511 and the first outer bar 521 may be adjacent to the left surface of the first side part 611, and the second inner bar 512 and the second outer bar 522 may be adjacent to the right surface of the second side part 612.

A first pin Pa may sequentially penetrate a first hole 511a of the first inner bar 511, the first and second side parts 611 and 612, and a first hole 512a of the second inner bar 512, and may be coupled to the first and second inner bars 511 and 512. The inner arm 51 may be rotatably coupled to the first bracket 61 about the first pin Pa. For example, the first pin Pa may be fixed to the inner arm 51 by a rivet or nut, and may rotate with respect to the first bracket 61. For example, washer(s) and/or disc spring(s) may be coupled to the first pin Pa, and may provide frictional force to the rotation of the inner arm 51 with respect to the first bracket 61.

A second pin Pb may sequentially penetrate a first hole 521a of the first outer bar 521, the first and second side parts 611 and 612, and a first hole 522a of the second outer bar 522, and may be coupled to the first and second outer bars 521 and 522. The outer arm 52 may be rotatably coupled to the first bracket 61 about the second pin Pb. For example, the second pin Pb may be fixed to the outer arm 52 by a rivet or nut, and may rotate with respect to the first bracket 61. For example, washer(s) and/or disc spring(s) may be coupled to the second pin Pb, and may provide friction for rotation of the outer arm 52 with respect to the first bracket 61. The central axis of the first pin Pa and the central axis of the second pin Pb may be spaced apart from each other. The central axis of the second pin Pb may be spaced upward from the central axis of the first pin Pa.

The second bracket 62 may be coupled to the rotatable connector 40 and may be adjacent to the other end of the support arm 50. The second bracket 62 may include a first side part 621, a second side part 622, and a body 623. The body 623 may form the rear portion of the second bracket 62. The body 623 may have the shape of a solid block (see FIG. 10) or a 'C' shaped bar (see FIG. 9). The first side part 621 may protrude in a forward direction from one side of the front end of the body 623, and the second side part 622 may protrude in a forward direction from the other side of the front end of the body 623. The first and second side parts 621 and 622 may be spaced apart from each other. A portion of the rotatable connector 40 may be inserted into between the first and second side parts 621 and 622. The second bracket 62 may include hot rolled galvanized iron (HGI) material. The second bracket 62 may be referred to as a front bracket 62.

In addition, the second bracket 62 may be located between the inner bars 511 and 512 of the inner arm 51. The second bracket 62 may be located between the outer bars 521 and 522 of the outer arm 52. The first inner bar 511 and the first outer bar 521 may be adj acent to the left surface of the body 623, and the second inner bar 512 and the second outer bar 522 may be adjacent to the right surface of the body 6623.

A third pin Pc may sequentially penetrate a second hole 511b of the first inner bar 511, the body 623, and a second hole 512B of the second inner bar 512, and may be coupled to the first and second inner bars 511 and 512. The inner arm 51 may be rotatably coupled to the second bracket 62 about the third pin Pc. For example, the third pin Pc may be fixed to the inner arm 51 by a rivet or nut, and may rotate with respect to the second bracket 62. For example, washer(s) and/or disc spring(s) may be coupled to the third pin Pc, and may provide friction force for rotation of the inner arm 51 with respect to the second bracket 62.

A fourth pin Pd may sequentially penetrate a second hole 521b of the first outer bar 521, the body 623, and a second hole 522b of the second outer bar 522, and may be coupled to the first and second outer bars 521 and 522. Since the outer arm 52 may be rotatably coupled to the second bracket 62 about the fourth pin Pd. For example, the fourth pin Pd may be fixed to the outer arm 52 by a rivet or nut, and may rotate with respect to the second bracket 62. For example, washer(s) and/or disc spring(s) may be coupled to the fourth pin Pd, and may provide friction force for rotation of the outer arm 52 with respect to the second bracket 62.

The central axis of the third pin Pc and the central axis of the fourth pin Pd may be spaced apart from each other. The central axis of the fourth pin Pd may be spaced upward from the central axis of the third pin Pc.

The second portion 531b of the rod 531 may be located between the first and second side parts 611 and 612 of the first bracket 61, and the rear end of the second portion 531b, i.e., a distal end 531c of the rod 531 may be located in a rear of the first bracket 61.

Referring again to FIG. 6, the support arm 50 may include an arm cover 54. The arm cover 54 may surround the inner arm 51, the outer arm 52, and the supporter 53, and may form the surface of the support arm 50. A lower cover 541 may form the lower portion of the arm cover 54, and an upper cover 542 may form the upper portion of the arm cover 54. The lower cover 541 may be latched to the outer bars 521 and 522 of the outer arm 52, and the upper cover 542 may be latched to the lower cover 541.

The distal end 531c of the rod 531 may be fixed to the arm cover 54. The distal end 531c of the rod 531 may be covered by the rear portion of the arm cover 54. Alternatively, the distal end 531c of the rod 531 may be exposed to the outside at the rear portion of the arm cover 54.

A portion of the first bracket 61 may be covered by the arm cover 54. At least a portion of the second bracket 62 may be covered by the arm cover 54. A ring body 480 of a holder 47 coupled to the second bracket 62 may be covered by the arm cover 54.

Referring again to FIGS. 9 and 10, the inner arm 51 of the support arm 50 can rotate around the first pin Pa, and the outer arm 52 of the support arm 50 can rotate around the second pin Pb. The inner arm 51 can rotate around the third pin Pc, and the outer arm 52 can rotate around the fourth pin Pd. The inner arm 51, the outer arm 52, and the pins Pa, Pb, Pc, and Pd may be a four-bar link connecting the first bracket 61 and the second bracket 62. The distance between the central axes of the first and second pins Pa and Pb may be equal to the distance between the central axes of the third and fourth pins Pc and Pd.

Accordingly, regardless of the tilting angle of the support arm 50 with respect to the first bracket 61, the angle of the second bracket 62 with respect to the horizontal line can be maintained constant. That is, regardless of the tilting angle of the support arm 50, the angle of the display 10 coupled to the second bracket 62 can be maintained constant (see FIG. 2).

The supporter 53 may be coupled to the inner arm 51 through the inner rib 514 and may rotate together with the inner arm 51. The length of the elastic member 534 of the supporter 53 can be varied according to the rotation (tilting) of the support arm 50, and the supporter 53 may provide a force that can offset the moment applied to the support arm 50 by the load of the display 10 (see FIG. 2). For example, the support arm 50 can be tilted within a range of +25 degrees to -25 degrees, and the height of the display 10 can be raised or lowered within a range of about 180 mm in response to the tilt of the support arm 50.

For example, the support arm 50 may rotate in a first rotation direction RD1 (see FIG. 9). In response to this, the outer rib 524 of the outer arm 52 can move in a direction closer to the inner rib 514 and push the cylinder 533 toward the stopper 532. Accordingly, the elastic member 534 between the flange 533F of the cylinder 533 and the flange 532F of the stopper 532 may be compressed. The force provided by the elastic member 534 may act as a moment to rotate the support arm 50 in a direction opposite to the first rotation direction RD1, and when such a moment is in balance with the moment to rotate the support arm 50 in the first rotation direction RD1, the support arm 50 can maintain a downward tilted state.

For example, the support arm 50 may rotate in a second rotation direction RD2 (see FIG. 9). In response to this, the outer rib 524 of the outer arm 52 may move in a direction away from the inner rib 514. Accordingly, the elastic member 534 between the flange 533F of the cylinder 533 and the flange 532F of the stopper 532 can be restored and extended. The force provided by the elastic member 534 may act as a moment to rotate the support arm 50 in the second rotation direction RD2, and when such a moment is in balance with the moment to rotate the support arm 50 in the first rotation direction RD1, the support arm 50 can maintain an upward tilted state.

A user can adjust the location of the flange 532F of the stopper 532 by rotating the rod 531 by using a tool such as a wrench that engages the distal end 531c of the rod 531. When a user rotates the rod 531 in the first rotation direction R1, the stopper 532 can move in a direction away from the inner rib 514, and the elastic member 534 can be further compressed. When a user rotates the rod 531 in the second rotation direction R2, the stopper 532 can move in a direction toward the inner rib 514, and the elastic member 534 can be less compressed.

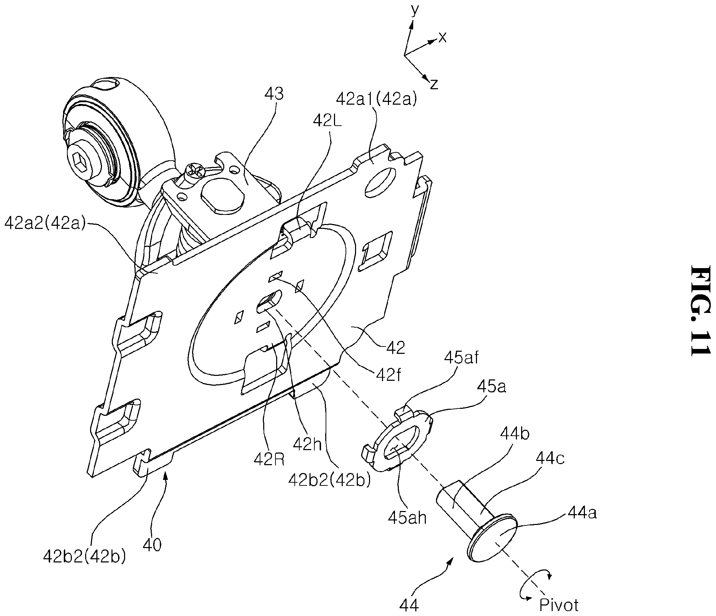

Referring to FIG. 11, a front bracket 42 of the rotatable connector 40 may have an overall plate shape. The rotatable connector 40 may be referred to as an articulated connector 40.

A pivot shaft 44 may extend in the front-rear direction. The diameter of the head 44a of the pivot shaft 44 may be larger than the diameter of the body 44b. A pair of cut-outs 44c may be formed on the side surface of the body 44b and may face each other. A hole 42h of the front bracket 42 may be formed at the center of the front bracket 42, and may be penetrated by the body 44b. The shape of the hole 42h of the front bracket 42 may be the same as the shape of the longitudinal cross-section of the body 44b. Accordingly, the pivot shaft 44 and the front bracket 42 can rotate together with respect to the axial direction of the pivot shaft 44. That is, the pivot shaft 44 can provide a pivot axis.

A front grab 45a may be located between the head 44a and the front surface of the front bracket 42. A hole 45ah of the front grab 45a may be aligned with the hole 42h of the front bracket 42, and may have the same shape as the hole 42h. The body 44b may penetrate the holes 45ah and 42h. The front grab 45a may be fixed to the front bracket 42. That is, the front grab 45a may rotate together with the pivot shaft 44 and the front bracket 42.

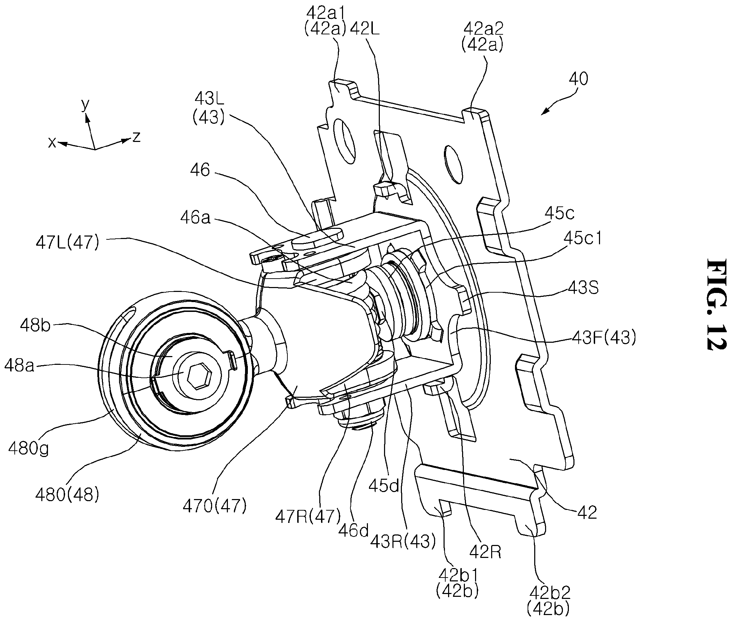

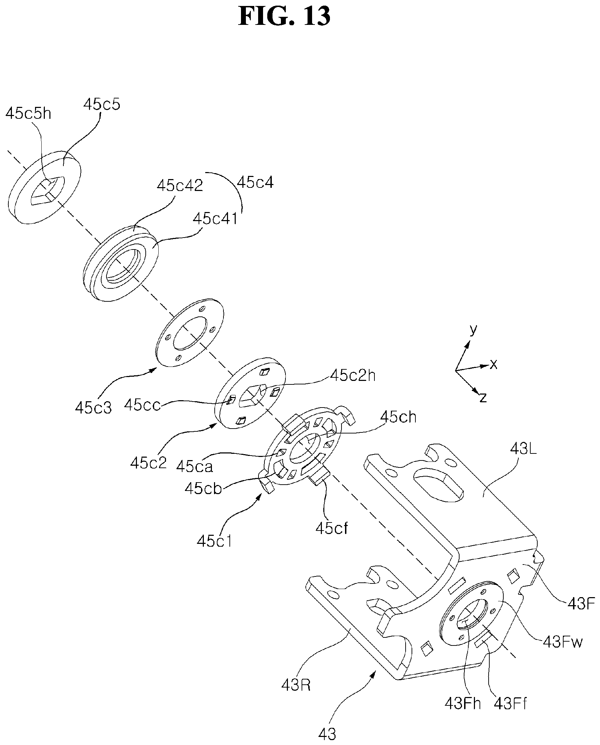

Referring to FIGS. 12 and 13, the rear bracket 43 may be located in a rear of the front bracket 42. The rear bracket 43 may include a mount 43F, a top wing 43L, and a bottom wing 43R.

The mount 43F may face the front bracket 42 and may be provided with a circular mount hole 43Fh. At least one washer 43Fw may be located between the front bracket 42 and the mount 43F and may have a circular hole. The body 44b of the pivot shaft 44 may penetrate the hole of the washer 43Fw and the mount hole 43Fh, and may rotate independently of the washer 43Fw and the mount 43F.

The top wing 43L may extend in a rearward direction from the upper side of the mount 43F. The bottom wing 43R may extend in a rearward direction from the lower side of the mount 43F. A plurality of members 45c (45c1, 45c2, 45c3, 45c4, and 45c5) described later may be coupled to the mount 43F at between the top wing 43L and the bottom wing 43R.

A rear grab 45c1 may face the washer 43Fw with respect to the mount 43F, and may be provided with a circular hole 45ch through which the body 44b of the pivot shaft 44 penetrates. The rear grab 45c1 can be fixed to the rear surface of the mount 43F.

In addition, a plurality of fixing holes 45ca and a plurality of slots 45cb may be formed in the rear grab 45c1 and may be spaced apart from each other in the circumferential direction of the rear grab 45c1. A plurality of fixing holes 45ca and a plurality of slots 45cb may be located alternately in the circumferential direction of the rear grab 45c1. For example, the fixing holes 45ca or the slots 45cb may be spaced apart from each other at 90-degree intervals. In the circumferential direction of the rear grab 45c1, the length of the slot 45cb may be larger than the length of the fixing hole 45ca.

A disk 45c2 may be located at the rear of the rear grab 45c1, and may have a hole 45c2h through which the body 44b penetrates and has the same shape as the longitudinal cross-section of the body 44b. A plurality of bosses 45cc may protrude from the front surface of the disc 45c2 toward the rear grab 45c1, and may be spaced apart from each other in the circumferential direction of the disc 45c2. For example, the bosses 45cc may be spaced apart from each other at 90-degree intervals. The size of the boss 45cc may be the same as or correspond to the size of the fixing hole 45ca. That is, when the boss 45cc is inserted into the fixing hole 45ca, the rotation of the disk 45c2 and the pivot shaft 44 may be restricted to a certain level by the rear grab 45c1. In addition, when the boss 45cc is inserted into the slot 45cb, the disk 45c2 and the pivot shaft 44 may rotate within the trajectory of the slot 45cb.

A washer 45c3 may be located at the rear of the disk 45c2 and may have a circular hole (no reference numeral) through which the body 44b of the pivot shaft 44 penetrates.

A disc spring 45c4 may be opposite to the disc 45c2 with respect to the washer 45c3, and may have a circular hole (no reference numeral) through which the body 44b of the pivot shaft 44 penetrates. The disc spring 45c4 may have elasticity and may be convex in a forward direction or rearward direction. The disc spring 45c4 may generate an elastic force in the axial direction of the pivot shaft 44.

A cap 45c5 may be located at the rear of the disc spring 45c4 and may have a hole 45c5h through which the body 44b of the pivot shaft 44 penetrates. The shape of the hole 45c5h may be the same as the shape of the longitudinal cross-section of the body 44b. The cap 45c5 may be fixed to the distal end of the body 44b.

Accordingly, the pivot shaft 44 may rotate together with the front bracket 42, the front grab 45a, the disk 45c2, and the cap 45c5. In addition, the pivot shaft 45 may rotate independently the washer 43Fw, the rear bracket 43, the rear grab 45c1, the washer 45c3, and the disc spring 45c4. In other words, even if the pivot shaft 45 rotates, the washer 43Fw, the rear bracket 43, the rear grab 45c1, the washer 45c3, and the disc spring 45c4 may not rotate.

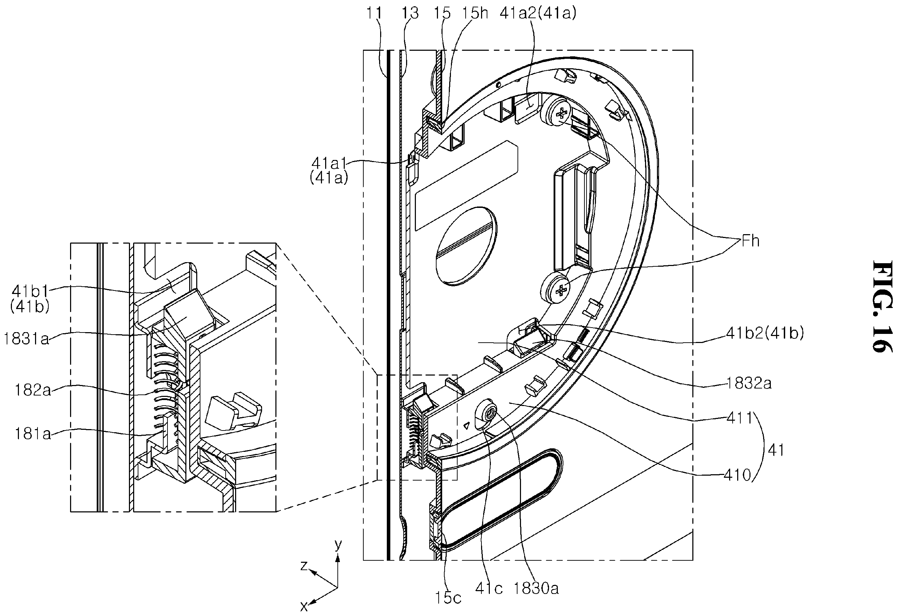

In addition, a user may pivot the display 10 (see FIGS. 16 and 10 described below) fixed to the front bracket 42 with respect to the pivot shaft 44. For example, the display 10 may be pivoted within a range of +90 degrees to -90 degrees. In addition, due to the elastic force of the disk spring 45c41, 45c2 described above, the display 10 may maintain a certain pivot angle unless an external force exceeding a certain level is applied. In addition, during the pivot movement of the display 10, a user may feel a sense of fastening due to the fastening of the boss 45cc and the fixing hole 45ca or slot 45cb. That is, when the boss 45cc comes out of the slot 45cb and is inserted into the fixing hole 45ca, a user may feel that the display 10 is located at a pivot angle of 0 degree, +90 degrees, or -90 degrees.

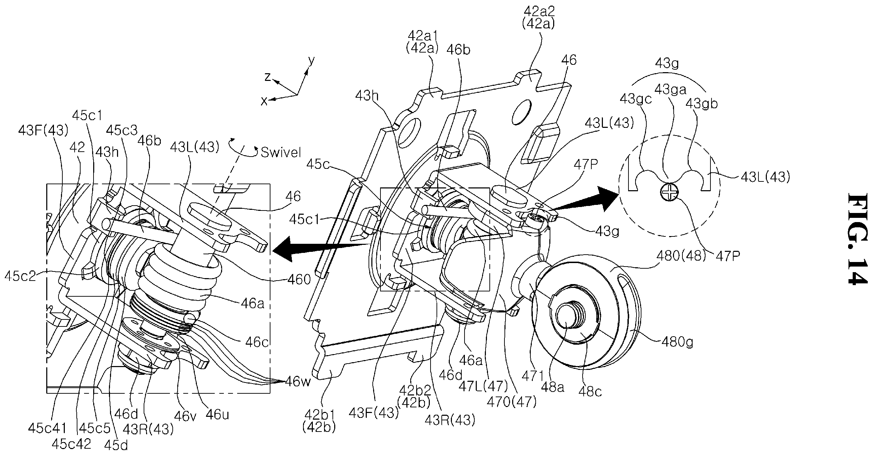

Referring to FIG. 14, the holder 47 may be located between the top wing 43L and the bottom wing 43R. A holder body 470 may cover the rear of the mount 43F of the rear bracket 43. The first part 47L may protrude from the upper portion of the holder body 470 toward the mount 43F and may be adjacent to the top wing 43L. The second part 47R (see FIG. 12) may protrude from the lower portion of the holder body 470 toward the mount 43F and may be adjacent to the bottom wing 43R.

A rotating shaft 46 may extend in a vertical direction. The rotating shaft 46 may penetrate the top wing 43L, the first part 47L, the second part 47R, and the bottom wing 43R. The head (no reference numeral), which is one end of the rotating shaft 46, may be located on the side surface of the top wing 43L. The other end of the rotating shaft 46 may be threaded, and a fastening member 46d, such as a nut, may be fastened to the other end of the rotating shaft 46 on the bottom wing 43R.

In addition, the rotating shaft 46 may have an overall cylindrical shape and may be fixed to the top wing 43L and the bottom wing 43R. The rotating shaft 46 may be rotatably coupled to the holder 47. That is, the rotating shaft 46 may provide a rotation axis (swivel axis). At least one washer 46v may be located between the second part 47R and the bottom wing 43R, and may have a circular hole through which the rotating shaft 46 penetrates.

An elastic member 46a may be located between the top wing 43L and the bottom wing 43R. The elastic member 46a may be wound around the outer circumference of the rotating shaft 46 in multiple turns and may have elasticity. The elastic member 46a may be a coil-shaped spring.

In addition, a portion 46b of the elastic member 46a may extend in a direction intersecting the rotating shaft 46 without being wound around the rotating shaft 46. The portion 46b of the elastic member 46a may be caught in a support portion 43h protruding rearward from the mount 43F.

In addition, one end of the elastic member 46a may be formed in the portion 46b, and the other end of the elastic member 46b may be fixed to the inside of the holder 47. A disc spring 46w may be adjacent to the other end 46c of the elastic member 46a, and may be located between the elastic member 46a and the second part 47R. The disc spring 46w may have a circular hole (no reference numeral) through which the rotating shaft 46 penetrates. The disc spring 46w may be convex in a direction toward the elastic member 46a and may generate elastic force in the axial direction of the rotating shaft 46.

Accordingly, the rotating shaft 46 can rotate together with the rear bracket 43, the front bracket 42, and the plurality of members 45c5, 45c4, 45c3, 45c2, 45c1, 43Fw, 45a, and 44. In response to the rotation of the rotating shaft 46, the display 10 (see FIGS. 16 and 10 described later) fixed to the front bracket 42 can be rotated (swivel) left and right. For example, display 10 can be swiveled within a range of +45 degrees to -45 degrees.

Meanwhile, a pin 47P may be fixed to the first part 47L and/or the second part 47R. For example, the pin 47P may protrude upward from the side surface of the first part 47L. The guide groove 43g may be formed by being recessed in a forward direction from the rear end of the top wing 43L. A reference point 43ga may be in contact with the pin 47P in a state where the display 10 (see FIGS. 16 and 10 described later) is not tilted to the left or right. A right groove 43gb can be formed by drawing an arc in a first rotation direction from the reference point 43ga. A left groove 43gc may be formed by drawing an arc from the reference point 43ga in a second rotation direction opposite to the first rotation direction. The rotation of the rotating shaft 46 may be restricted by the pin 47P being caught in the right groove 43gb or the left groove 43gc.

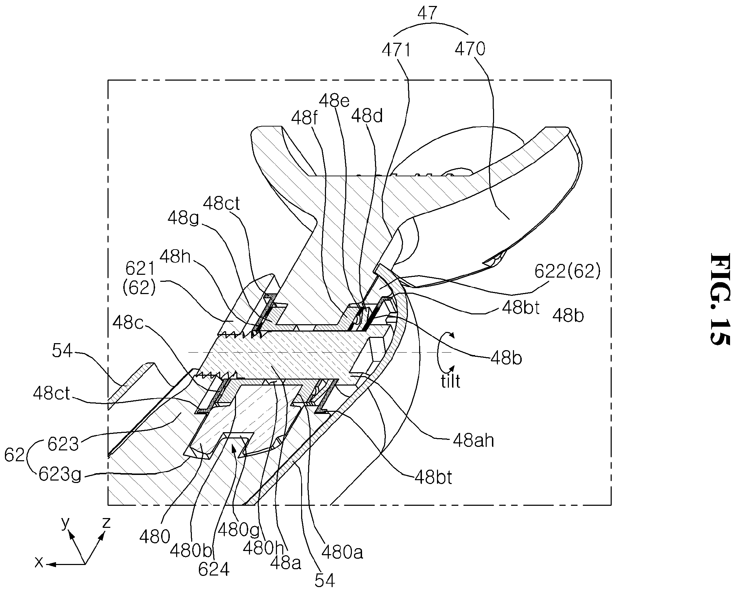

Referring to FIG. 15, an ankle 471 of the holder 47 may connect the holder body 470 and a rotation unit 48 of the holder 47. The rotation unit 48 may be referred to as a rotation body 48 or a tilting unit 48. The ankle 471 may be referred to as a connection portion 471.

The rotation unit 48 may include a ring body 480, a shaft 48a, a first fixing washer 48b, a disc spring 48d, a first washer 48e, a first bushing 48f, a second bushing 48g, a second washer 48h, and a second fixing washer 48c.

The ring body 480 may be opened to the left and right. The ring body 480 may have an overall donut shape. For example, the ring body 480 may be formed as one body with the ankle 471. It can be inserted between the first and second side parts 621 and 622 of the second bracket 62.

The shaft 48a may extend in the left-right direction. The shaft 48a may penetrate the hole 480h formed in the center of the ring body 480. The shaft 48a may be a fastening member such as a bolt. The shaft 48a may be fastened to the first side part 621, and the head 48ah of the shaft 48a may be caught in the second side part 622.

The first fixing washer 48b may be located below the head 48ah of the shaft 48a and may be penetrated by the shaft 48a. The first fixing washer 48b may be a toothed lock washer, and a tooth 48bt of the first fixing washer 48b may be inserted and fixed into a groove (no reference numeral) formed on the inside of the second side part 622.

The disc spring 48d may be located below the first fixing washer 48b. The disc spring 48d may be convex toward the first fixing washer 48b and exert an elastic force in the axial direction of the shaft 48a.

The first washer 48e may be located below the disc spring 48d and may be penetrated by the shaft 48a.

The first bushing 48f may be opposite to the disc spring 48d with respect to the first washer 48e. The shaft 48a may penetrate the first bushing 48f. The first bushing 48f may have a cylindrical shape having a flange (no reference numeral) formed at the upper end. The flange of the first bushing 48f may be in contact with the first upper groove 480a formed along the hole 480h on the upper surface of the ring body 480. A portion (no reference numeral) of the first bushing 48f may be inserted into the hole 480h of the ring body 480 and may be located between the inner circumferential surface of the ring body 480 and the outer circumferential surface of the shaft 48a.

The second bushing 48g may be opposite to the first bushing 48f and may be spaced to the left from the first bushing 48f. The shaft 48a may penetrate the second bushing 48g. The second bushing 48g may have a cylindrical shape having a flange (no reference numeral) formed at the lower end. The flange of the second bushing 48g may be in contact with a first lower groove 480b formed along the circumference of the hole 480h on the lower surface of the ring body 480. A portion (no reference numeral) of the second bushing 48g may be inserted into the hole 480h of the ring body 480 and may be located between the inner circumferential surface of the ring body 480 and the outer circumferential surface of the shaft 48a.

The second washer 48h may be located below the second bushing 48g and may be penetrated by the shaft 48a.

The second fixing washer 48c may be opposite to the second bushing 48g with respect to the second washer 48h and may be penetrated by the shaft 48a. The second fixing washer 48c may be a toothed lock washer, and a tooth 48ct of the second fixing washer 48c may be inserted into and fixed to a groove (no reference numeral) formed on the inside of the first side part 621.

Accordingly, the ring body 480 can rotate with respect to the shaft 48a fixed to the second bracket 62. That is, the shaft 48a may provide a tilting axis. In addition, due to the elastic force of the disk spring 48d described above, the display 10 can maintain a certain tilting angle unless an external force exceeding a certain level is applied. For example, the display 10 can be tilted within a range of +65 degrees to -65 degrees.

A groove 480g may be formed in an arc shape at the rear portion of the ring body 480. A protrusion 624 may protrude from the body 623 of the second bracket 62 toward the groove 480g. When one end or the other end of the groove 480g is in contact with the protrusion 624, rotation of the ring body 480 may be restricted.

Referring to FIG. 16 together with FIGS. 10 and 14, a recessed portion 41 may be formed by being recessed in a forward direction from the back cover 15 of the display. The recessed portion 41 may include a first recessed portion 410 and a second recessed portion 411. The first recessed portion 410 may be formed by being recessed in the rear surface of the back cover 15. The second recessed portion 411 may be formed by recessed in a forward direction from the rear surface of the first recessed portion 410, and may form the central portion of the recessed portion 41.

A bottom hole 41b may be formed to penetrate the second recessed portion 411 and may be located below the center of the recessed portion 41. The bottom hole 41b may be formed in the lower portion of the second recessed portion 411, and may be located at the boundary between the second recessed portion 411 and the first recessed portion 410. A first locking portion 1831a may be located in a first bottom hole 41b1, and a second locking portion 1832a may be located in a second bottom hole 41b2.

A top hole 41a may be formed to penetrate the second recessed portion 411 and may be located above the center of the recessed portion 41. The top hole 41a may be formed in the upper portion of the second recessed portion 411 and may be located at the boundary between the second recessed portion 411 and the first recessed portion 410. In the vertical direction, a first top hole 41a1 and a second top hole 41a2 may be aligned with the first bottom hole 41b1 and the second bottom hole 41b2, respectively.

A top protrusion 42a may protrude upward from the upper side of the front bracket 42. A first top protrusion 42a1 may be adjacent to the left side of the front bracket 42. A second top protrusion 42a2 may be adjacent to the right side of the front bracket 42.

A bottom protrusion 42b may protrude downward from the lower side of the front bracket 42. A first bottom protrusion 42b1 may be adjacent to the left side of the front bracket 42. A second bottom protrusion 42b2 may be adjacent to the right side of the front bracket 42.

The first top protrusion 42a1, the second top protrusion 42a2, the first bottom protrusion 42b1, and the second bottom protrusion 42b2 may be located at the corners of the front bracket 42.

The first bottom protrusion 42b1 may correspond to the first bottom hole 41b1. The first bottom protrusion 42b1 may be caught in the first locking portion 1831a. The second bottom protrusion 42b2 may correspond to the second bottom hole 41b2. The second bottom protrusion 42b2 may be caught in the second locking portion 1832a.

The first top protrusion 42a1 may correspond to the first top hole 41a1. The first top protrusion 42a1 may be caught in the first top hole 41a1. The second top protrusion 42a2 may correspond to the second top hole 41a2. The second top protrusion 42a2 may be caught in the second top hole 41a2. Accordingly, the rotatable connector 40 coupled to the second bracket 62 can be detachably coupled to the display 10.

A cover 40c may cover the rear of the rotatable connector 40 and may be coupled to the display 10. An inner cover 40c1 may be fixed to the rear of the rotatable connector 40 and may form the central portion of the cover 40c. The inner cover 40c1 may be located at the rear of the holder body 470 of the holder 47. The inner cover 40c1 may be located between the holder body 470 and the ring body 480 of the holder 47. The outer cover 40c2 may extend along the circumference of the inner cover 40c1 and be fixed to the recessed portion 41 of the back cover 15. Accordingly, with respect to the inner cover 40c1, the outer cover 40c2 can be pivoted together with the display 10.

A cover hole 40h may be formed in the inner cover 40c1 and may have a transversely elongated slot shape in response to the left-right rotation (i.e., swivel) of the display 10 around the rotating shaft 46 described above. That is, the cover hole 40h may be formed long in the direction of rotation of the display 10 around the rotating shaft 46. The ankle 471 of the holder 47 may be located in the cover hole 40h. According to the left-right rotation of the display 10, the ankle 471 of the holder 47 may approach one end or the other end of the cover hole 40h. A cable electrically connected to the display 10 may pass through the cover hole 40h.

A slot 54h may be formed in the arm cover 54 and may have a longitudinally elongated slot shape that corresponds to the up-down rotation (i.e., tilting) of the display 10 about the above described shaft 48a. One end of the arm cover 54 may be rounded, and the slot 54h may be formed long at one end of the arm cover 54 along the rotation trajectory of the ankle 471. According to the up-down rotation of the display 10, the ankle 471 of the holder 47 may approach one end or the other end of the slot 54h. A cable electrically connected to the display 10 may pass through the cover slot 54h.

One end of the arm cover 54 facing the cover 40c may be spaced apart from the inner cover 40c1 while being adjacent to the inner cover 40c1. The ankle 471 of the holder 47 may be located between the one end of the arm cover 54 and the inner cover 40c1. The transversely elongated holes 40h in the cover 40c and the longitudinally elongated slot 54h in the arm cover 54 may extend in a direction that intersects each other.

Referring to FIGS. 1 to 16, the display device 1 may include: a display panel 11; a first bracket 61 positioned behind the display panel 11; a second bracket 62 positioned between the display panel 11 and the first bracket 61 and coupled to the display panel 11; and a support arm 50 elongated and connecting the first and second brackets 61 and 62, wherein the support arm 50 may include: an inner arm 51 rotatably coupled to each of the first and second brackets 61 and 62; an outer arm 52 adjacent to the inner arm 51, and rotatably coupled to each of the first and second brackets 61 and 62; and a supporter 53 which has one side coupled to the inner arm 51 and the other side supporting the outer arm 52, the supporter 53 including an elastic member 534 which is compressible in a longitudinal direction of the support arm 50.

One end of the inner arm 51 and one end of the outer arm 52 may be rotatably coupled to the first bracket 61, and the other end of the inner arm 51 and the other end of the outer arm 52 may be rotatably coupled to the second bracket 62, wherein a distance between a central axis of rotation of the one end of the inner arm 51 and a central axis of rotation of the one end of the outer arm 52 may be equal to a distance between a central axis of rotation of the other end of the inner arm 51 and a central axis of rotation of the other end of the outer arm 52.

The display device 1 may further include: a first pin Pa which couples the one end of the inner arm 51 to the first bracket 61, and which provides the central axis of rotation of the one end of the inner arm 51; a second pin Pb which couples the one end of the outer arm 52 to the first bracket 61, and which provides the central axis of rotation of the one end of the outer arm 52; a third pin Pc which couples the other end of the inner arm 51 to the second bracket 62, and which provides the central axis of rotation of the other end of the inner arm 51; and a fourth pin Pd which couples the other end of the outer arm 52 to the second bracket 62, and which provides the central axis of rotation of the other end of the outer arm 52.

The inner arm 51 may include: a pair of inner bars 511 and 512 opposite to each other; and an inner bridge 513 connecting the pair of inner bars 511 and 512, wherein each of the pair of inner bars 511 and 512 may be rotatably coupled to each of the first and second brackets 61 and 62.

The outer arm 52 may include: a pair of outer bars 521 and 522 opposite to each other; and an outer bridge 523 connecting the pair of outer bars 521 and 522, wherein each of the pair of outer bars 521 and 522 may be rotatably coupled to each of the first and second brackets 61 and 62.

The outer arm 52 may be positioned above the inner arm 51, the inner arm 51 may include an inner rib 514 bent downward from one side of the inner arm 51, the outer arm 52 may include an outer rib 524 which is bent downward from one side of the outer arm 52 and opposite to the inner rib 514, and the supporter 53 may be coupled to the inner rib 514, and may support the outer rib 524.

The supporter 53 may include: a rod 531 extending in the longitudinal direction of the support arm 50 and penetrating the inner rib 514; a stopper 532 positioned between the inner rib 514 and the outer rib 524 and movably coupled to the rod 531 in a longitudinal direction of the rod 531; and a cylinder 533 opposite to the stopper 532 and movably coupled to the rod 531 in the longitudinal direction of the rod 531, wherein the elastic member 534 is positioned between the stopper 532 and the cylinder 533, and the outer rib 524 may be supported by the cylinder 533.

The rod 531 may include a male thread formed at an outer circumferential surface of the rod 531, the stopper 532 may include a female thread engaging with the male thread, and the elastic member 534 may be compressed as the stopper 532 approaches the cylinder 533 in response to rotation of the rod 531.

The stopper 532 may include a flange 532F which is formed at one end of the stopper 532 facing the inner rib 514, and to which one end of the elastic member 534 is fixed, and the cylinder 533 may include a flange 533F which is formed at one end of the cylinder 533 facing the outer rib 524, and to which the other end of the elastic member 534 is fixed.

The inner arm 51 may further include: a pair of inner bars 511 and 512 opposite to each other; and an inner bridge 513 connecting the pair of inner bars 511 and 512. The outer arm 52 may include: a pair of outer bars 521 and 522 opposite to each other with respect to the pair of inner bars 511 and 512; and an outer bridge 523 positioned above the inner bridge 513 and connecting the pair of outer bars 521 and 522. The inner rib 514 may be bent from the inner bridge 513 to between the pair of inner bars 511 and 512, and the outer rib 524 may be bent from the outer bridge 523 to between the pair of inner bars 511 and 512.

The display device 1 may further include a holder 47 positioned between the display panel 11 and the second bracket 62 and coupled to the display panel 11, wherein the holder 47 may include: a ring body 480 coupled to the display panel 11; and a shaft 48a extending in a direction parallel to a front surface of the display panel 11 and coupling the ring body 480 to the second bracket 62, wherein the ring body 480 may be rotatable around the shaft 48a.

The holder 47 may further include: an ankle 471 protruding from the ring body 480 toward the display panel 11; and a holder body 470 opposite to the ring body 480 with respect to the ankle 471. The support arm 50 may include: an arm cover 54 forming an outer surface of the support arm 50; and a slot 54h which is formed at one end of the arm cover 54 facing the display panel 11, and in which the ankle 471 is positioned, wherein the slot 54h may be formed along a rotation trajectory of the ankle 471.

The display device 1 may further include: a rear bracket 43 positioned between the display panel 11 and the second bracket 62 and coupled to the display panel 11; a holder 47 positioned between the rear bracket 43 and the second bracket 62 and coupled to the second bracket 62; and a rotating shaft 46 extending in a direction parallel to a front surface of the display panel 11 and coupling the rear bracket 43 to the holder 47, wherein the rear bracket 43 may be rotatable around the rotating shaft 46.

The display device 1 may further include a cover 40c covering a rear of the rear bracket 43 and coupled to the display panel 11. The holder 47 may include: a holder body 470 coupled to the rotating shaft 46; a ring body 480 coupled to the second bracket 62; and an ankle 471 connecting the holder body 470 and the ring body 480. The cover 40c may include a cover hole 40h which is formed along a rotation direction of the rear bracket 43, and in which the ankle 471 is positioned.

The display device 1 may further include: a front bracket 42 coupled to a rear of the display panel 11; a rear bracket 43 positioned behind the front bracket 42, and to the front bracket 42 is rotatably coupled about a first axis perpendicular to a front surface of the display panel 11; and a holder 47 positioned behind the rear bracket 43, and to which the rear bracket 43 is rotatably coupled about a second axis perpendicular to the first axis, wherein the holder 47 may be rotatably coupled to the second bracket 62 about a third axis perpendicular to the first and second axes.

The effects of the display device according to the present disclosure will be described as follows.

According to at least one of the embodiments of the present disclosure, it is possible to provide a display device having a stand that supports a display panel.

According to at least one of the embodiments of the present disclosure, it is possible to provide a structure that can freely adjust the angle or height of a display panel.

According to at least one of the embodiments of the present disclosure, it is possible to provide various motion operations of a display panel.

Certain embodiments or other embodiments of the disclosure described above are not mutually exclusive or distinct from each other. Any or all elements of the embodiments of the disclosure described above may be combined or combined with each other in configuration or function.

For example, a configuration "A" described in one embodiment of the disclosure and the drawings and a configuration "B" described in another embodiment of the disclosure and the drawings may be combined with each other. Namely, although the combination between the configurations is not directly described, the combination is possible except in the case where it is described that the combination is impossible.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A display device (1) comprising:
a display panel (11);
a first bracket (61) positioned behind the display panel (11);
a second bracket (62) positioned between the display panel (11) and the first bracket (61) and coupled to the display panel (11); and
a support arm (50) elongated and connecting the first and second brackets (61, 62),
wherein the support arm (50) comprises:
an inner arm (51) rotatably coupled to each of the first and second brackets (61, 62);
an outer arm (52) adjacent to the inner arm (51) and rotatably coupled to each of the first and second brackets (61, 62); and
a supporter (53) which has one side coupled to the inner arm (51) and the other side supporting the outer arm (52), the supporter (53) including an elastic member (534) which is compressible in a longitudinal direction of the support arm (50).

2. The display device (1) of claim 1, wherein one end of the inner arm (51) and one end of the outer arm (52) are rotatably coupled to the first bracket (61),
wherein the other end of the inner arm (51) and the other end of the outer arm (52) are rotatably coupled to the second bracket (62),
wherein a distance between a central axis of rotation of the one end of the inner arm (51) and a central axis of rotation of the one end of the outer arm (52) is equal to a distance between a central axis of rotation of the other end of the inner arm (51) and a central axis of rotation of the other end of the outer arm (52).

3. The display device (1) of claim 2, further comprising:
a first pin (Pa) which couples the one end of the inner arm (51) to the first bracket (61), and which provides the central axis of rotation of the one end of the inner arm (51);
a second pin (Pb) which couples the one end of the outer arm (52) to the first bracket (61), and which provides the central axis of rotation of the one end of the outer arm (52);
a third pin (Pc) which couples the other end of the inner arm (51) to the second bracket (62), and which provides the central axis of rotation of the other end of the inner arm (51); and
a fourth pin (Pd) which couples the other end of the outer arm (52) to the second bracket (62), and which provides the central axis of rotation of the other end of the outer arm (52).

4. The display device (1) of any one of claims 1 to 3, wherein the inner arm (51) comprises:
a pair of inner bars (511, 512) opposite to each other; and
an inner bridge (513) connecting the pair of inner bars (511, 512),
wherein each of the pair of inner bars (511, 512) is rotatably coupled to each of the first and second brackets (61, 62).

5. The display device (1) of any one of claims 1 to 4, wherein the outer arm (52) comprises:
a pair of outer bars (521, 522) opposite to each other; and
an outer bridge (523) connecting the pair of outer bars (521, 522),
wherein each of the pair of outer bars (521, 522) is rotatably coupled to each of the first and second brackets (61, 62).

6. The display device (1) of any one of claims 1 to 5, wherein the outer arm (52) is positioned above the inner arm (51),
wherein the inner arm (51) comprises an inner rib (514) bent downward from one side of the inner arm (51), wherein the outer arm (52) comprises an outer rib (524) which is bent downward from one side of the outer arm (52) and opposite to the inner rib (514),
wherein the supporter (53) is coupled to the inner rib (514) and supports the outer rib (524).

7. The display device (1) of claim 6, wherein the supporter (53) comprises:
a rod (531) extending in the longitudinal direction of the support arm (50) and penetrating the inner rib (514);
a stopper (532) positioned between the inner rib (514) and the outer rib (524) and movably coupled to the rod (531) in a longitudinal direction of the rod (531); and
a cylinder (533) opposite to the stopper (532) and movably coupled to the rod (531) in the longitudinal direction of the rod (531),
wherein the elastic member (534) is positioned between the stopper (532) and the cylinder (533), and
the outer rib (524) is supported by the cylinder (533).

8. The display device (1) of claim 7, wherein the rod (531) comprises a male thread formed at an outer circumferential surface of the rod (531),
wherein the stopper (532) comprises a female thread engaging with the male thread,
wherein the elastic member (534) is compressed as the stopper (532) approaches the cylinder (533) in response to rotation of the rod (531).

9. The display device (1) of claim 7 or 8, wherein the stopper (532) comprises a flange (532F) which is formed at one end of the stopper (532) facing the inner rib, and to which one end of the elastic member (534) is fixed,
wherein the cylinder (533) comprises a flange (533F) which is formed at one end of the cylinder (533) facing the outer rib (524), and to which the other end of the elastic member (534) is fixed.

10. The display device (1) of any one of claims 7 to 9, wherein the inner arm (51) further comprises:
a pair of inner bars (511, 512) opposite to each other; and
an inner bridge (513) connecting the pair of inner bars (511, 512),
wherein the outer arm (52) comprises:
a pair of outer bars (521, 522) opposite to each other with respect to the pair of inner bars (511, 512); and
an outer bridge (523) positioned above the inner bridge (513) and connecting the pair of outer bars (521, 522),
wherein the inner rib (514) is bent from the inner bridge (513) to between the pair of inner bars (511, 512),
wherein the outer rib (524) is bent from the outer bridge (523) to between the pair of inner bars (511, 512).

11. The display device (1) of any one of claims 1 to 10, further comprising a holder (47) positioned between the display panel (11) and the second bracket (62) and coupled to the display panel (11),
wherein the holder (47) comprises:
a ring body (480) coupled to the display panel (11); and
a shaft (48a) extending in a direction parallel to a front surface of the display panel (11) and coupling the ring body (480) to the second bracket (62),
wherein the ring body (480) is rotatable around the shaft (48a).

12. The display device (1) of claim 11, wherein the holder (47) further comprises:
an ankle (471) protruding from the ring body (480) toward the display panel (11); and
a holder body (470) opposite to the ring body (480) with respect to the ankle (471),
wherein the support arm (50) comprises:
an arm cover (54) forming an outer surface of the support arm (50); and
a slot (54h) which is formed at one end of the arm cover (54) facing the display panel (11), and in which the ankle (471) is positioned,
wherein the slot (54h) is formed along a rotation trajectory of the ankle (471).

13. The display device (1) of any one of claims 1 to 12, further comprising:
a rear bracket (43) positioned between the display panel (11) and the second bracket (62) and coupled to the display panel (11);
a holder (47) positioned between the rear bracket (43) and the second bracket (62) and coupled to the second bracket (62); and
a rotating shaft (46) extending in a direction parallel to a front surface of the display panel (11) and coupling the rear bracket (43) to the holder (47),
wherein the rear bracket (43) is rotatable around the rotating shaft (46).

14. The display device (1) of claim 13, further comprising a cover (40c) covering a rear of the rear bracket (43) and coupled to the display panel (11),
wherein the holder (47) comprises:
a holder body (470) coupled to the rotating shaft (46);
a ring body (480) coupled to the second bracket (62); and
an ankle (471) connecting the holder body (470) and the ring body (480),
wherein the cover (40c) comprises a cover hole (40h) which is formed along a rotation direction of the rear bracket (43), and in which the ankle (471) is positioned.

15. The display device (1) of any one of claims 1 to 14, further comprising:
a front bracket (42) coupled to a rear of the display panel (11);
a rear bracket (43) positioned behind the front bracket (42), and to the front bracket (42) is rotatably coupled about a first axis perpendicular to a front surface of the display panel (11); and
a holder (47) positioned behind the rear bracket (43), and to which the rear bracket (43) is rotatably coupled about a second axis perpendicular to the first axis,
wherein the holder (47) is rotatably coupled to the second bracket (62) about a third axis perpendicular to the first and second axes.
